# EUROPÄISCHE PATENTSCHRIFT

(11) **EP 0 837 271 B1**
(45) Veröffentlichungstag und Bekanntmachung des Hinweises auf die Patenterteilung: **03.04.2002**
(21) Anmeldenummer: 97116853.9
(22) Anmeldetag: 29.09.1997
(51) Int. Cl.: F16K 1/54, F16K 1/38

(54) **Ventil mit Laval-Düse**
Valve with a Laval nozzle
Soupape avec une buse de laval.

(30) Priorität: 18.10.1996 DE 19643054
(43) Veröffentlichungstag der Anmeldung: 22.04.1998
(73) Patentinhaber: XCELLSIS GmbH, 73230 Kirchheim / Teck-Nabern (DE)
(72) Erfinder: Denda, Michael, 89250 Senden (DE); Fleck, Wolfram, 89155 Erbach (DE); Sang, Jochen, 70372 Stuttgart (DE)
(74) Vertreter: Kocher, Klaus-Peter Dipl.-Phys

(56) Entgegenhaltungen:
- DE-A- 3 444 039
- DE-A- 4 100 086
- FR-A- 668 431
- US-A- 1 698 826
- US-A- 4 413 646
- US-A- 5 368 273
- US-A- 5 515 674

## Beschreibung

Die Erfindung bezieht sich auf ein Ventil nach dem Oberbegriff des Anspruchs 1 sowie auf die Verwendung eines solchen Ventils.

Ein Ventil dieser Art ist in der Offenlegungsschrift DE 42 33 207 A1 offenbart. Das dortige Ventil wird als Belüftungsventil zur Belüftung evakuierter Räume verwendet. Die den Ventilnadelfuß aufnehmende Einlaßkammer, in welche die zu Belüftungszwecken verwendete Luft radial einströmt, befindet sich strömungsäufwärts direkt angrenzend an die Eintrittsebene der Laval-Düse. Das der Einlaßkammer zugewandte Stirnende der Laval-Düse dient als hubbegrenzende Anschlagfläche für einen korrespondierenden Anschlagbund des Ventilnadelfußes.

In der Offenlegungsschrift DE 36 26 681 A1 ist ein Ventil zur Steuerung der Luft- und/oder Kraftstoffmenge in Verbrennungskraftmaschinen beschrieben, das in einem zugehörigen Ansaugluft- Leitrohr angeordnet ist. Das Ventil beinhaltet eine Laval-Düse und einen darin eingreifenden Schließkörper, der eine kegelige Form mit kalottenartig gewölbter Grundfläche besitzt und axial beweglich an einem Führungsrohr geführt ist. Der Düseneintritts-bereich wird von der kalottenartig gewölbten Schließkörperaußen-fläche einerseits und einer diese mit Abstand umgebenden Blende konkaver Form andererseits definiert, an die direkt eine Einlaß-kammer anschließt, welcher die angesaugte Luft- bzw. Kraftstoffströmung radial oder axial zugeführt ist.

Ein in der Offenlegungsschrift DE 34 44 039 A1 offenbartes Stellventil beinhaltet eine Laval-Düse und eine axial beweglich in die Laval-Düse eingreifende Ventilnadel. Die Ventilnadel wird in einem mittleren Abschnitt mit Abstand von einem rohrförmigem Ventilgehäuse umgeben, wobei in den dadurch gebildeten Ringspalt Leitbleche eingebracht sind, um die durchtretende Gasströmung zu führen und zu richten. Eintrittsseitig schließt sich an das rohrförmige Ventilgehäuse eine zuführende Rohrleitung an, die einen etwas geringeren Innenquerschnitt als das rohrförmige Ventilgehäuse besitzt und zur Eintrittsöffnung hin als gerundeter Bogen aus der Axialrichtung der Anordnung schräg herausgebogen ist. Die geradlinig axial verlaufende Ventilnadel tritt mit ihrem Fußbereich durch eine in der Zufuhrrohrleitung vorgesehene Durchtrittsöffnung hindurch, wobei in dieser Durchtrittsöffnung eine Führungsbuchse fixiert eingebaut ist, die zur axial beweglichen Führung der Ventilnadel dient.

Die bekannte Eigenschaft einer Laval-Düse, daß die austrittsseitigen Druckverhältnisse den Eintrittsbereich nicht beeinflussen, wird bei einer in der Offenlegungsschrift DE 41 00 086 A1 offenbarten Kraftstoffeinspritzvorrichtung für eine Brennkraftmaschine ausgenutzt. Die Laval-Düse sitzt dabei zwischen einer Kraftstoffaustrittsöffnung und einer strömungsabwärts von dieser angeordneten Gemischaustrittsöffnung. Die Laval-Düse ermöglicht eine gute Aufbereitung des Kraftstoff-/Luft-Gemischs, ohne daß dazu ein hoher Kraftstoffeinspritzdruck erforderlich ist.

Zur Zudosierung von Prozeßgasen sind in der Prozeßtechnik Dosierventile in Form von pulsbreitengesteuerten 2/2-Wegeventilen, Nadelventilen mit Stelleinrichtung oder proportional arbeitenden Magnetventilen bekannt. Für die genaue Zudosierung von Gasmengen in einen Prozeßreaktor mit schwankendem Innendruck muß dabei meist eine aufwendige Druckregelung installiert werden, um die gewünschte Dosiergenauigkeit einzuhalten. Zudem wird bei diesen herkömmlichen Ventilen oftmals ein aufwendiger Regelkreis mit entsprechender Sensorik benötigt. Hierzu benutzte Massenstrommeßeinrichtungen besitzen prinzipbedingt eine gewisse Trägheit, welche die Schnelligkeit von Dosierungsänderungen begrenzt.

Der Erfindung liegt als technisches Problem die Bereitstellung eines Ventils der eingangs genannten Art mit einer hinsichtlich Druckschwankungen vergleichsweise unempfindlichen Strömungsführung sowie eines vorteilhaften Verwendungszweckes für ein solches Ventil zugrunde.

Die Erfindung löst dieses Problem durch die Bereitstellung eines Ventils mit den Merkmalen des Anspruchs 1 sowie einer Verwendung gemäß Anspruch 4.

Bei dem Ventil nach Anspruch 1 ist die Einlaßkammer, in welche eine oder mehrere radial verlaufende Einlaßöffnungen münden, von der Eintrittsebene der Laval-Düse axial durch einen zwischenliegenden Strömungskanal beabstandet, welcher radial nach innen von der Ventilnadel und radial nach außen von einem die Ventilnadel mit entsprechendem Zwischenraum umgebenden Ventilgehäuseabschnitt begrenzt ist. Durch diese Maßnahme erfolgt die Umlenkung der radial zugeführten Strömung in die im Laval-Düsenbereich axiale Strömung bereits mit einem der Länge des Strömungskanals entsprechenden Abstand vor dem Düseneintritt. Die durch das Ventil hindurchgeführte Strömung verläuft damit über die Länge dieses Strömungskanals hinweg bereits vor Erreichen des engsten Durchtrittsquerschnitts im Laval-Düsenbereich in der axialen Richtung, in der sie auch die Laval-Düse passiert. Dadurch kann sich im Bereich des engsten Durchtrittsquerschnitts der Laval-Düse die dortige, kritische Düsendurchströmung (M=1) stabil einstellen, ohne daß Druckschwankungen, insbesondere des an der Austrittsseite der Laval-Düse herrschenden Gegendrucks, diese stabile Durchströmung merklich stören.

Die bei dem erfindungsgemäßen Ventil vorliegende Beabstandung des Strömungsumlenkbereichs, d.h. der Einlaßkammer, von der Eintrittsebene der Laval-Düse bewirkt zudem, daß die Strömungsumlenkung in einer Zone erfolgt, in welcher die Strömungsgeschwindigkeit noch merklich geringer als im Eintrittsbereich der Laval-Düse ist. Damit lassen sich die Strömungsumlenkverluste gering halten, was wiederum bedeutet, daß sich das Ventil über einen relativ großen nutzbaren Betriebsbereich des Verhältnisses von Gegendruck zu Vordruck, d.h. von düsenaustrittsseitigem zu düseneintrittsseitigem Druck, zur Bereitstellung gewünschter, definierter Strömungsverhältnisse verwenden läßt.

Ein nach Anspruch 2 weitergebildetes Ventil besitzt günstige Durchströmungseigenschaften sowie eine von außerhalb der Laval-Düse angeordneten Anschlagflächen definierte Ventilnadelhubbegrenzung, so daß die Laval-Düsenflächen nicht mit entsprechenden Anschlagkräften belastet werden.

Bei einem nach Anspruch 3 weitergebildeten Ventil ist eine in das Ventilgehäuse eingesetzte Hülse vorgesehen, welche zum einen als Führung für die axial bewegliche, durch die Hülse hindurchgeführte Ventilnadel dient und zum anderen mit einer oder mehreren axial verlaufenden Ausnehmungen versehen ist, die in diesem Bereich den entsprechenden Abschnitt des zwischenliegenden Strömungskanals bilden.

Gemäß Anspruch 4 wird das erfindungsgemäße Ventil als Dosierventil zur Zudosierung eines Prozeßgases für einen Reaktionsprozeß in einem brennstoffzellenbetriebenen Kraftfahrzeug verwendet. Mit dem Ventil ist mit vergleichsweise geringem Aufwand eine sehr genaue Zudosierung des betreffenden Prozeßgases erzielbar, was für die entsprechenden Reaktionen in den Brennstoffzellen selbst und/oder den diesen vorgeschalteten Reaktoren, z.B. Reformierungsreaktoren zur Wasserstoffgewinnung, von großer Bedeutung ist. Der erfindungsgemäße Ventilaufbau macht es dabei möglich, in kostengünstiger Weise ohne aktive Sensorik und Regelkreise den gewünschten Massenstrom weitgehend unabhängig von Druckschwankungen einzustellen.

Eine bevorzugte Ausführungsform der Erfindung ist in der Zeichnung dargestellt und wird nachfolgend beschrieben.

Die einzige Figur zeigt eine Längsschnittansicht eines in brennstoffzellenbetriebenen Kraftfahrzeugen verwendbaren Dosierventils.

In brennstoffzellenbetriebenen Kraftfahrzeugen wird den Brennstoffzellen unter anderem Wasserstoff zugeführt, der beispielsweise aus einer Methanolreformierungsreaktion gewonnen wird. Dabei muß das Eduktgas aus dem Reformierungsreaktor von schädlichem Kohlenmonoxid gereinigt werden, um die nachfolgenden Brennstoffzellen nicht zu schädigen. Dies kann bekanntermaßen z.B. mittels selektiver Oxidation bewerkstelligt werden, wobei der Luftsauerstoff dem Prozeß fein dosiert und abhängig vom Eduktstrom proportional oder nach einer vorgegebenen Abhängigkeit zudosiert wird, vorzugsweise in mehreren, hintereinander angeordneten Reaktoren. Die einzelnen Reaktoren unterliegen unterschiedlichen Druckniveaus, wobei als zusätzliche Randbedingung bei diesen mobilen Anwendungen betriebsbedingte Druckschwankungen von bis zu 50% des Nenn- oder Auslegungsdruckes auftreten. Das gezeigte Ventil läßt sich dazu verwenden, den Luftsauerstoff trotz dieser Bedingungen ohne hohen technischen Regelungsaufwand mit ausreichender Genauigkeit zuzudosieren. Es erlaubt außerdem hohe Stellgeschwindigkeiten, wie sie für den Prozeß der Wasserstoffgaserzeugung unter den üblichen, dynamischen Fahrzeugbetriebsbedingungen gefordert werden.

Das gezeigte Ventil besitzt hierzu einen speziellen Aufbau, der eine Düse 1 in Form einer sogenannten Laval-Düse umfaßt, die in einem eintrittsseitigen Abschnitt 1a einen konvergenten und in einem austrittsseitigen Abschnitt 1b einen divergenten Strömungsquerschnitt besitzt und in eine zugehörige axiale Aufnahmebohrung eines Ventilgehäuses 9 eingesetzt ist. In die Laval-Düse 1 greift mit ihrer Spitze 8 in Strömungsrichtung weisend eine speziell geformte, nach vorn zugespitzt verlaufende Ventilnadel 4 ein, die in axialer Richtung beweglich im Ventilgehäuse 9 angeordnet ist. Durch die axiale Verschiebung der Ventilnadel 4 wird die Größe des engsten Durchtrittsquerschnitts 5 des Ventils eingestellt, der stets im Bereich der Düse 1 liegt. Der Fuß 2 der Ventilnadel 4 befindet sich innerhalb einer Einlaßkammer 3 und ist mit einem Linearaktuator 10 verbunden, über den die Ventilnadel 4 elektrisch angetrieben in die jeweils gewünschte Axialposition gesteuert werden kann. Die Einlaßkammer 3 ist von einer Axialbohrung gebildet, die auf der düsenabgewandten Seite in das zylindrische Ventilgehäuse 9 eingebracht und an ihrem düsenabgewandten Ende durch den Linearaktuator 10 unter Zwischenfügung eines Dichtrings 16 abgeschlossen ist. In die Einlaßkammer 3 mündet eine radial verlaufende Einlaßöffnung 11 ein.

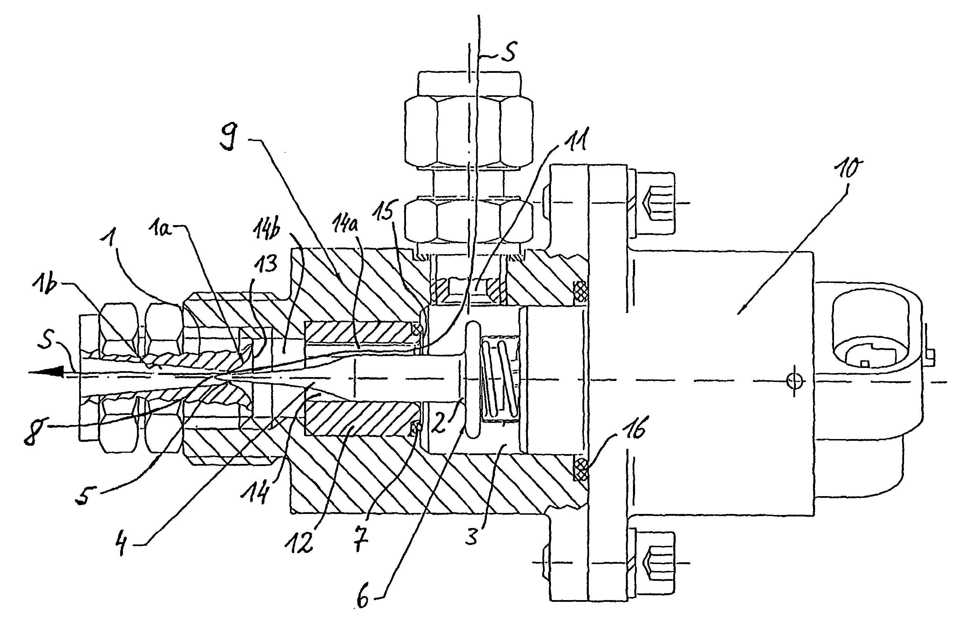

Die Einlaßkammer 3 ist axial von der Eintrittsebene 13 der Laval-Düse 1 um die Länge eines zwischenliegenden Strömungskanals 14 beabstandet, der radial nach innen von der Ventilnadel 4 und radial nach außen vom entsprechenden Ventilgehäuseabschnitt begrenzt ist. Ein eintrittskammerseitiger Abschnitt dieses zwischenliegenden Strömungskanals 14 ist dabei von mehreren Ausnehmungen 14a gebildet, von denen in der Fig. 1 eine zu erkennen ist und die axial verlaufend und mit äquidistantem Umfangsabstand an der Innenseite einer Hülse 12 ausgebildet sind, die in eine zugehörige axiale Ventilgehäusebohrung mit Preßsitz eingesetzt ist. Die Ventilnadel 4 ist durch diese Hülse 12 hindurchgeführt und liegt gegen deren radiale Innenflächenbereiche zwischen den Ausnehmungen 14a mit einem noch nicht zugespitzten Bereich gleitend an, so daß sie in ihrer Axialbewegung von der Hülse 12 geführt wird. Die Ausnehmungen 14a münden in Strömungsrichtung in einen düsenseitigen Abschnitt 14b des zwischenliegenden Strömungskanals 14, wobei dieser düsenseitige Abschnitt 14b von einem weiteren Axialbohrungsbereich des Ventilgehäuses 9 gebildet ist und einen gegenüber dem Gesamtdurchtrittsquerschnitt der axial verlaufenden Ausnehmungen 14a der Hülse 12 größeren Durchtrittsquerschnitt besitzt.

Die Ventilnadel 4 besitzt an ihrem Fuß 2 einen Anschlagbund 6, der die axiale Hubbewegung der Ventilnadel 4 in Strömungsrichtung dadurch begrenzt, daß er gegen das eintrittskammerseitige Stirnende 15 der eingesetzten Hülse 12 anschlägt, das mit einem elastischen Dichtring 7 versehen ist. Der Dichtring 7 gewährleistet für die durch diesen Anschlag definierte, geschlossene Ventilstellung eine vollständige Gasdichtheit zwischen der Einlaßkammer 3 und dem in Strömungsrichtung anschließenden Strömungskanal 14. In geöffneter Ventilstellung kann entsprechend dem gezeigten Strömungspfeil S ein dampf- oder vorzugsweise gasförmiges Medium unter einem bestimmten Vordruck über die Einlaßöffnung 11 in die Einlaßkammer 3 in radialer Richtung eingeleitet werden. In der Einlaßkammer 3 wird die Strömung S in Axialrichtung umgelenkt und tritt durch die Ausnehmungen 14a an der Innenseite der eingesetzten Hülse 12 in den düsenseitigen Abschnitt 14b des zwischenliegenden Strömungskanals 14 ein. Von dort strömt das Medium in die Laval-Düse 1 und durchquert diese unter Beibehaltung der schon im vorgeschalteten Strömungskanal 1 vorliegenden, im wesentlichen axialen Strömungsrichtung.

Durch die spezielle Gestaltung der Düse 1 und des in diese eingreifenden Bereichs der Ventilnadel 4 wird erreicht, daß sich der Massenstrom des das Ventil durchquerenden Mediums, der vom Wert des engsten Durchtrittsquerschnitts 5 des Ventils abhängig ist und damit durch die Axialbewegung der Ventilnadel 4 auf einen gewünschten Wert einstellbar ist, über einen weiten Bereich möglicher Schwankungen des Verhältnisses des am Düsenausgang herrschenden Gegendrucks zu dem Vordruck, unter dem das Medium in das Ventil einströmt, im wesentlichen konstant halten läßt. Während der Massenstrom bei gegebenem, engstem Ventildurchtrittsquerschnitt im Fall von herkömmlichem Drosselstellen meist schon ab einem Druckverhältnis von etwa 0,53 (für zweiatomige Gase ist κ=1,4) mit wachsendem Druckverhältnis merklich abnimmt, bleibt er beim gezeigten Ventil bis zu einem Druckverhältnis von etwa 0,8 näherungsweise konstant.

Mit dem gezeigten Ventil läßt sich somit ein gas- oder dampfförmiges Medium mit geringem Aufwand vergleichsweise genau zudosieren, ohne daß ein Sensor im Linearaktuator 10 oder eine Massenstromerfassung zur Istwertgewinnung für einen Regelkreis erforderlich ist. Das Ventil arbeitet im Auslegungsbereich aufgrund der Laval-Strömungsbedingungen praktisch gegendruckunabhängig. Durch den Einsatz der Laval-Düse 1 kann der Vordruck um bis zu 30% gegenüber einer herkömmlichen Drosselstelle abgesenkt werden, wodurch sich auch die zu installierende Verdichterarbeit und dadurch die Leistungsaufnahme entsprechend reduziert. Da kein Differenzdruckregler zur Kompensation von Gegendruckschwankungen erforderlich ist, wird ein kompakter Ventilaufbau ermöglicht.

Bei konstantem Vordruck und konstanter Vorlauftemperatur ist der Massenstrom durch das Ventil streng linear von der Fläche des engsten Durchtrittsquerschnitts abhängig. Der konstante Vordruck wird üblicherweise durch ein Überdruckventil, das einem entsprechenden Verdichter zugeordnet ist, bereitgestellt. Zusätzliche Meßsensorik und Druckregelorgane zur Massenstromsteuerung können entfallen. Da die Ventilnadel axial kontinuierlich bewegbar ist, unterliegt sie nur einem sehr geringen Verschleiß, so daß keine Degradation der Dosiergenauigkeit auftritt. Das Ventil ist ohne weiteres auf eine Temperaturfestigkeit bis 130°C auslegbar, bei geeigneter Isolation des Linearaktuators 10 auch auf höhere Temperaturen. Die Ansteuerung des Linearaktuators 10 kann über die herkömmlicherweise in Kraftfahrzeugen vorhandenen Elektronikkomponenten bzw. Rechnereinheiten erfolgen. Neben dem bereits explizit erwähnten Verwendungszweck ist das erfindungsgemäße Ventil, das zudem trockenlauffähig ist, zur Zudosierung beliebiger nicht aggressiver Gase und Brenngase in chemischen Prozeßanlagen einsetzbar, wie beispielsweise Wasserstoff, Stickstoff, Luft, Methan, Butan, Propan und Wasserdampf.

## Patentansprüche

1. Ventil mit
- einer Laval-Düse (1),
- einer axial beweglich in die Laval-Düse eingreifenden Ventilnadel (4) und
- einer den Ventilnadelfuß (2) aufnehmenden Einlaßkammer (3), in die eine radial verlaufende Einlaßöffnung (11) mündet,
**dadurch gekennzeichnet, daß**
- die Einlaßkammer (3) von der Eintrittsebene (13) der Laval-Düse (1) axial durch einen zwischenliegenden Strömungskanal (14) beabstandet ist, welcher von der Ventilnadel (4) einerseits und von einem die Ventilnadel axial führend umgebenden Ventilgehäuseabschnitt (12) andererseits begrenzt ist.

2. Ventil nach Anspruch 1, weiter
**dadurch gekennzeichnet, daß**
der Strömungskanal (14) aus einem düsenseitigen Abschnitt (14b) und einem einlaßkammerseitigen Abschnitt (14a) besteht, wobei letzterer einen kleineren Durchtrittsquerschnitt als der düsenseitige Abschnitt besitzt und wobei das einlaßkammerseitige Stirnende (15) des den einlaßkammerseitigen Strömungskanalabschnitt radial nach außen begrenzenden Ventilgehäuseabschnitts als hubbegrenzende Anschlagfläche für einen korrespondierenden Anschlagbund (6) am Ventilnadelfuß (2) fungiert.

3. Ventil nach Anspruch 2, weiter
**dadurch gekennzeichnet, daß**
der den einlaßkammerseitigen Strömungskanalabschnitt radial nach außen begrenzende Ventilgehäuseabschnitt aus einer in eine Ventilgehäusebohrung eingesetzten Hülse (12) besteht, die an ihrer Innenseite mit einer oder mehreren, den einlaßkammerseitigen Strömungskanalabschnitt bildenden, axial verlaufenden Ausnehmungen (14a) versehen ist und mit ihrem radial innenliegenden Innenflächenbereich als Führung für die axial beweglich hindurchgeführte Ventilnadel (4) dient.

4. Verwendung des Ventils nach einem der Ansprüche 1 bis 3 als Dosierventil zur Zudosierung eines Prozeßgases für einen Reaktionsprozeß in einem brennstoffzellenbetriebenen Kraftfahrzeug.

## Claims

1. Valve comprising
- a Laval nozzle (1),
- an axially displaceable valve needle (4) engaging in the Laval nozzle and
- an inlet chamber (3) receiving the valve needle base (2), into which a radially extending inlet orifice (11) opens,
**characterised in that**
- the inlet chamber (3) is spaced at an axial distance from the inlet plane (13) of the Laval nozzle (1) by means of a flow passage (14) disposed in between, which is bounded on the one hand by the valve needle (4) and on the other by a valve housing section (12) enclosing and axially guiding the valve needle.

2. Valve as claimed in claim 1, further
**characterised in that**
the flow passage (14) consists of a nozzle-end section (14b) and an inlet chamber-end section (14a), the latter having a smaller flow cross section than the nozzle-end section, and wherein the inlet chamber-end end face (15) of the valve housing section bounding the inlet chamber-end flow passage section radially to the exterior acts as a stroke-limiting stop surface for a corresponding stop shoulder (6) on the valve needle base (2).

3. Valve as claimed in claim 2, further
**characterised in that**
the valve housing section bounding the inlet chamber-end flow passage section radially towards the exterior consists of a sleeve (12) inserted in a valve housing bore provided with one or more axially extending recesses (14a) forming the inlet chamber-end flow passage section and its internal surface region lying radially towards the interior acts as a guide for the axially displaceable valve needle (4) inserted therethrough.

4. Use of the valve as claimed in one of claims 1 to 3 as a metering valve for metering a process gas for a reaction process in a fuel cell-operated motor vehicle.

## Revendications

1. Soupape comportant
- une buse de Laval (1),
- une aiguille de soupape (4) qui est déplaçable axialement et s'engage dans la buse de Laval, et
- une chambre d'entrée (3), qui loge le pied (2) de l'aiguille de soupape et dans laquelle débouche une ouverture radiale d'entrée (11),
**caractérisée en ce que**
- la chambre d'entrée (3) est séparée axialement du plan d'entrée (13) de la buse de Laval (1) par un canal intercalaire d'écoulement (14), qui est délimité d'une part par l'aiguille de soupape (4) et d'autre part par une section (12) du boîtier de soupape, qui entoure l'aiguille de soupape en la guidant axialement.

2. Soupape selon la revendication 1, **caractérisée en outre en ce qu'**un canal d'écoulement (14) est constitué par un tronçon (14b) situé côté buse et par un tronçon (14a) situé côté chambre d'entrée, ce dernier tronçon possédant une section transversale de passage plus petite que le tronçon situé côté buse, tandis que l'extrémité frontale (15), située du côté de la chambre d'entrée, de la section du boîtier de soupape, qui délimite radialement vers l'extérieur le tronçon du canal de circulation, qui situé du côté de la chambre d'entrée, agit en tant que surface de butée, qui limite la course de déplacement, pour un collet de butée correspondant (6) situé sur le pied (2) de l'aiguille de soupape.

3. Soupape selon la revendication 2, **caractérisée en outre en ce que** la section du boîtier de soupape, qui limite radialement vers l'extérieur le tronçon du canal d'écoulement, qui est situé du côté de la chambre d'entrée, est constituée par une douille (12), qui est insérée dans un perçage du boîtier de soupape, qui comporte sur son côté intérieur, un ou plusieurs évidements axiaux (14a), qui forment le tronçon du canal d'écoulement situé du côté de la chambre d'entrée, et sert, avec sa partie intérieure du point de vue radial de la surface intérieure, de guide pour l'aiguille de soupape (4) qui les traverse en étant mobile axialement.

4. Utilisation d'une soupape selon l'une des revendications 1 à 3, en tant que soupape de dosage pour l'envoi dosé d'un gaz de traitement pour un processus de réaction dans un véhicule automobile alimenté par une pile à combustible.
